# EUROPEAN PATENT APPLICATION

(11) **EP 4 810 331 A1**
(43) Date of publication of application: **23.09.2026**
(21) Application number: 26166459.3
(22) Date of filing: 20.03.2026
(51) Int. Cl.: B60T 3/00, B60P 3/077

(54) **WHEEL CHOCK ASSEMBLY, WHEEL CHOCK HOLDER, AND TRUCK**

(30) Priority: 21.03.2025 NL 2040019
(71) Applicant: DAF Trucks N.V., 5643 TW Eindhoven (NL)
(72) Inventor: HERMELING, Hendrikus, 5643 TW Eindhoven (NL)
(74) Representative: V.O.

(57) **Abstract**

Disclosed herein is a wheel chock assembly comprising a wheel chock (200) and a wheel chock holder (100). The wheel chock holder comprises a base plate (110) that provides a contact surface (113) arranged for abutting the flat wall of the wheel chock in a secured position. A stud pin (120) protrudes from the base plate at an incline angle such that it is inclined towards the contact surface. In the secured position, the stud pin extends through a pivot element (203) of the wheel chock while the flat wall abuts the contact surface. Locking means (130) are provided at a distal end of the stud pin and arranged for preventing a movement of the wheel chock away from the contact surface of the base plate due to a rotation of the wheel chock about the centerline of the stud pin.

## Description

The invention relates to a wheel chock assembly, comprising a wheel chock and a wheel chock holder. The invention further relates to a wheel chock holder for holding the wheel chock. The invention further relates to a truck comprising the wheel chock assembly.

### BACKGROUND

A wheel chock is a wedge-shaped device, typically made of rubber, plastic, or metal, which can be placed against a vehicle's wheel to prevent it from rolling. Wheel chocks are commonly used as a safety measure when parking on an incline, performing maintenance, or securing trailers. An example of a wheel chock is described in EP3895941.

Trucks can be provided with a wheel chock holder so that a wheel chock can be carried along and used whenever necessary. It is important that the wheel chock is reliably secured by the wheel chock holder, so that the wheel chock does not come loose or fall off the truck during driving. For this reason, wheel chock holders may include straps or other fixation means. However, a downside of such fixation means is that it can be time consuming to take out the wheel chock, and to secure it back in the holder when no longer needed.

Furthermore, while it may be preferred to have a wheel chock holder in proximity of the wheels of the truck, there may be limited amount of space available to install such a wheel chock holder on the chassis when the truck has a compact architecture. Conversely, the presence of a wheel chock holder may limit installation space for other components.

Also, in case the wheel chock holder is mounted at a rear end of the truck, the holder including the wheel chock may partially obstruct parts of the truck that need to be visible by other road users, such as taillights or a license plate.

It is an object of the present invention to provide a compact, non-obtrusive solution for carrying a wheel chock on board of a truck.

### SUMMARY

In one aspect, the invention provides a wheel chock assembly as defined in the appended claims. The wheel chock assembly comprises a wheel chock with a wedge-shaped body that is defined by at least one substantially flat wall for resting against a ground and, at the top, at least one wall for bearing against a wheel of a vehicle, which is inclined with respect to the wall for resting against the ground. The wedge-shaped body comprises two body sections that are fastened to each other in a rotatable manner around a common pivot element so as to be movable between a first closed configuration, in which the two body sections outline a compact wedge-shaped body, and a second spaced-apart configuration, in which the two body sections outline an extended wedge-shaped body.

The wheel chock assembly further comprises a wheel chock holder that is arranged for releasably holding the wheel chock in a secured position. The wheel chock holder comprises a base plate that is mountable to the truck and provides a contact surface arranged for abutting the flat wall of the wheel chock in the secured position. A stud pin protrudes from the base plate at an incline angle such that the stud pin is inclined towards the contact surface. In the secured position, the stud pin extends through the pivot element of the wheel chock while the flat wall abuts the contact surface. Locking means are provided at a distal end of the stud pin and arranged for preventing a movement of the wheel chock away from the contact surface of the base plate due to a rotation of the wheel chock about the centerline of the stud pin.

Accordingly, by having the stud pin oriented at the incline angle with respect to the base plate, the wheel chock holder prevents rotation of the wheel chock about the centerline of the stud pin. During such a rotation, the incline angle between the stud pin and the base plate forces the wheel chock against the base plate, which would cause the wheel chock to slide off the stud pin. The locking means, however, prevent this sliding movement. As a result, the rotation of the wheel chock is constrained. Accordingly, a self-locking effect is obtained. By extending though the pivot element, the stud pin also constrains translations and rotation of the wheel chock in any other directions.

The proposed wheel chuck holder solution thus securely holds and constrains the wheel chuck against movement in any direction, in a simple and compact manner.

In preferred embodiments, the incline angle is in a range between 40 and 80 degrees. The incline angle between the stud pin and the base plate of the wheel chuck holder is about the same as or smaller than the angle between the pivot element and the flat wall of the wheel chuck. Preferably, the incline angle is at least 5-20 degrees smaller than the angle between the pivot element and the flat wheel of the wheel chuck. In general, a smaller incline angle between the stud pin and the contact surface creates a larger movement away from the base plate when the wheel chuck is rotated about the centerline of the stud pin. Therefore, the self-locking effect is greater with a smaller incline angle, e.g. between 40 and 60 degrees or less between the centerline of the stud pin and the contact surface.

The base plate may comprise a first section that provides the contact surface, and a second section that provides a slope surface that is sloped with respect to the contact surface, e.g. by means of a bend in the base plate. When the stud pin extends perpendicularly from the slope surface, the centerline of the stud pin is oriented at the incline angle with respect to the contact surface.

In preferred embodiments, the stud pin is cylindrical, e.g. corresponding with a cylindrical hole in the pivot element. An outer diameter of the stud pin may be equal to, or less than 10% smaller than, an inner diameter of the pivot element, to minimize play between the pivot element and the stud pin.

Preferably, the locking means are releasable for allowing removal of the wheel chock from the wheel chock holder. The locking means may comprise at least one of: (i) a retaining pin that is removably inserted into a transverse hole at the distal end of the stud pin; (ii) a retaining cap that is releasably attached to the distal end of the stud pin by a threaded connection; and (iii) a snap-fit connection between the distal end of the stud pin and the pivot element of the wheel chock. Other locking means, such as a locking spring, circlip, key or latch member may also be suitable for releasably locking the wheel chock onto the stud pin. Optionally, the locking means may comprise a pad lock or other locking device for preventing unauthorized release of the wheel chock from its secured position.

The wheel chock holder can be made of any suitable material, such as a polymer material or a metal. In case of a metal the wheel chock holder may be painted or zinc coated to prevent corrosion.

In some embodiments, the wheel chock holder is arranged for holding a further wheel chock in a secured position directly next to the wheel chock. In that case the wheel chock holder comprises a further stud pin that protrudes from the base plate at the incline angle, such that a centerline of the further stud pin is inclined towards the contact surface. The further stud pin extends through the pivot element of the further wheel chock in the secured position, and further locking means are provided at a distal end of the further stud pin for preventing a movement of the further wheel chock away from the contact surface of the base plate due to a rotation of the further wheel chock about the centerline of the further stud pin. In other words, a single wheel chock holder may be configured to hold more than one wheel chock in the same way, e.g. next to each other.

The stud pin and the further stud pin are preferably parallel and coplanar, so that the plurality of wheel chocks held by the wheel chock holder are oriented substantially parallel and at the same level next to each other. A particularly compact solution is obtained when a distance between the centerline of the stud pin and the centerline of the further stud pin is equal to a thickness of the wheel chock in the first closed configuration.

In other aspects, the invention provides a wheel chock holder that is arranged for holding a wheel chock as described above in a secured position. The wheel chock holder as defined in the appended claims may be the same as the wheel chock holder of the wheel chock assembly described herein.

In yet other aspects, the present invention provides a truck, comprising the wheel chock assembly described herein. The base plate of the wheel chock holder is mounted to a chassis of the truck, such that the contact surface is in a substantially vertical orientation and, due to the incline angle, the stud pin is tilted upward with respect to a substantially level orientation. In a particularly compact and space saving configuration, the wheel chock holder may be mounted to the chassis behind a rear axle of the truck, in a space between the chassis and a rear wheel bay. The truck may further comprise a license plate that is attached to a further rear wheel bay on an opposing lateral side of the truck. In other words, the wheel chock holder is provided on the non-license plate side of the truck, to ensure that the license plate is clearly visible, e.g. not obstructed by the wheel chock holder.

### BRIEF DESCRIPTION OF THE DRAWINGS

The invention will be further elucidated in the figures:
FIG. 1 provides a rear view of an embodiment of a truck, comprising a wheel chock holder;
FIGs. 2A-2B illustrate an exemplary embodiment of a prior art wheel chock of the type that can be held by the wheel chock holder of the present invention;
FIG. 3 illustrates an embodiment of the wheel chock holder in detail;
FIG. 4 illustrates an embodiment of a wheel chock assembly comprising a wheel chock that is held securely by the wheel chock holder described herein;
FIGs. 5A-5B illustrate other or further embodiments of the wheel chock assembly, arranged for securely holding a plurality of wheel chocks.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

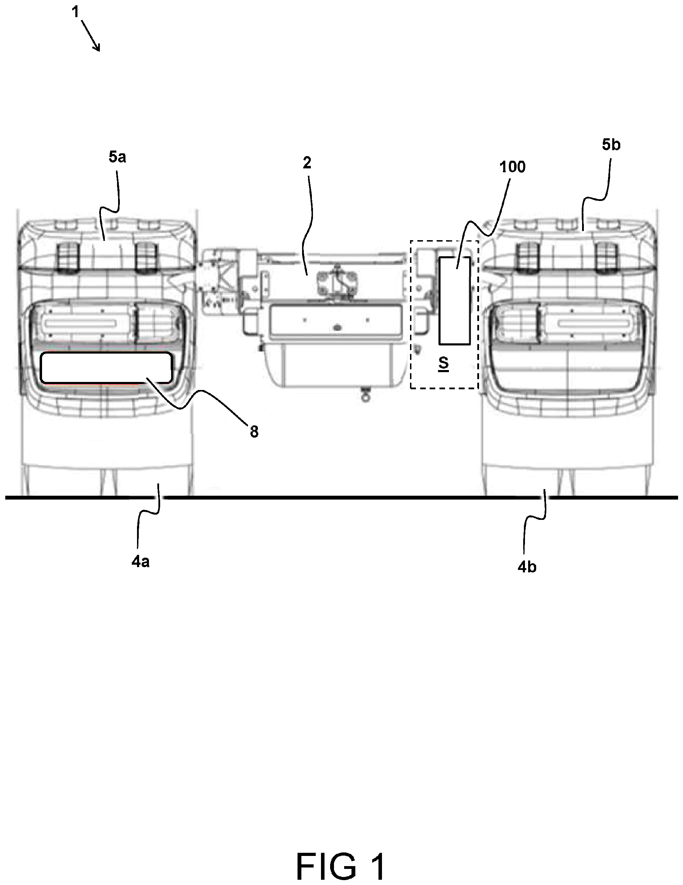

FIG. 1 provides a rear view of an embodiment of a truck 1, e.g. from a person standing behind the truck 1 and looking in the driving direction. The truck 1 comprises a chassis 2. A rear axle is suspended to the chassis and connects to wheels 4a, 4b on opposing lateral sides of the chassis 2. Each wheel is covered by a wheel bay 5a, 5b or fender.

A license plate 8 is mounted to a rear side of one of the wheel bays 5a, e.g. on the driver side of the truck 1, which may be the left or right hand side of the truck, the left hand side in this example. On the opposing lateral side of the chassis 2, in the space S between the chassis 2 and the other wheel bay 5b behind a rear axle of the truck, a wheel chock holder 100 is provided, for releasably holding one or more wheel chocks in a secured position in the space S, e.g. a wheel chock of the type described in EP3895941. Accordingly, the wheel chock(s) can be stowed compactly and securely, without obstruction a visual line of sight between other road users and the license plate 8.

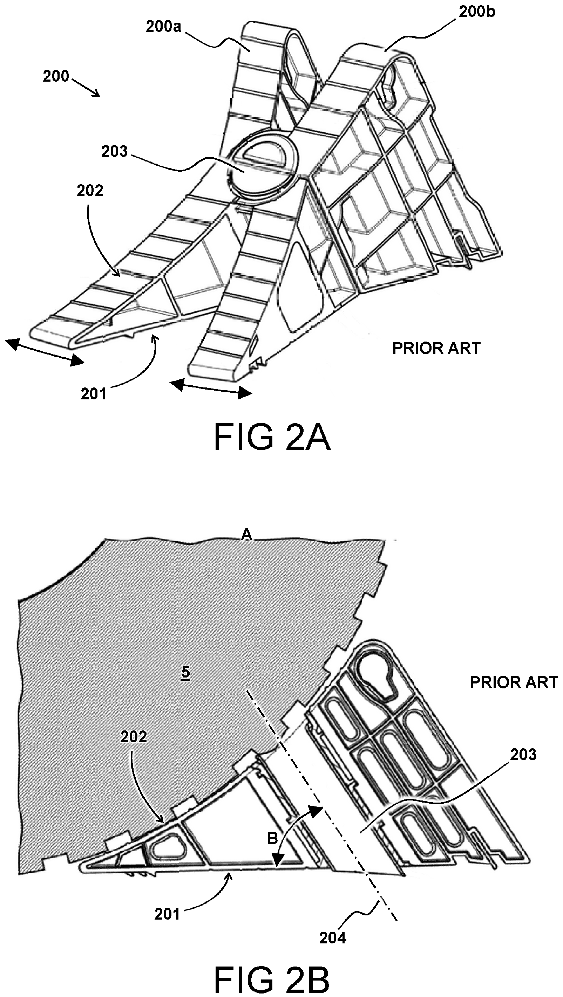

FIGs. 2A-B illustrate an exemplary embodiment of a prior art wheel chock 200 of the type that is suitable to be held by the wheel chock holder 100 of the present invention. The wheel chock 200 comprises a wedge-shaped body that is defined by a pair of substantially flat walls 201 for resting against a ground and, at the top, a pair of walls 202 for bearing against a wheel 5 of a vehicle. The wheel bearing wall 202 is inclined with respect to the wall 201 for resting against the ground. The wedge-shaped body comprises two body sections 200a, 220b that are fastened to each other in a rotatable manner around a common pivot element 203, e.g. about its centerline 204. Accordingly, the two body sections 200a, 200b are movable between a first closed configuration, in which the two body sections outline a compact wedge-shaped body, and a second spaced-apart configuration as shown in FIG. 2, in which the two body sections 200a, 200b outline an extended wedge-shaped body, e.g. with an X-shape as seen from the top. In some cases, the common pivot element 203 extends at an angle B that deviates from 90 degrees with respect to the flat wall 201. In other words, when resting against a flat surface, e.g. the ground, the pivot element 203 may not be perpendicular to the flat surface, but instead tilted forward towards the thinnest part of the wedge-shaped body. Thus, in use, when the top wall 202 of the wheel chock 200 is bearing against a wheel, the centerline 204 of the pivot element 203 can be substantially directed towards the wheel axle, or centerline of the wheel 5, although this is not necessarily always the case.

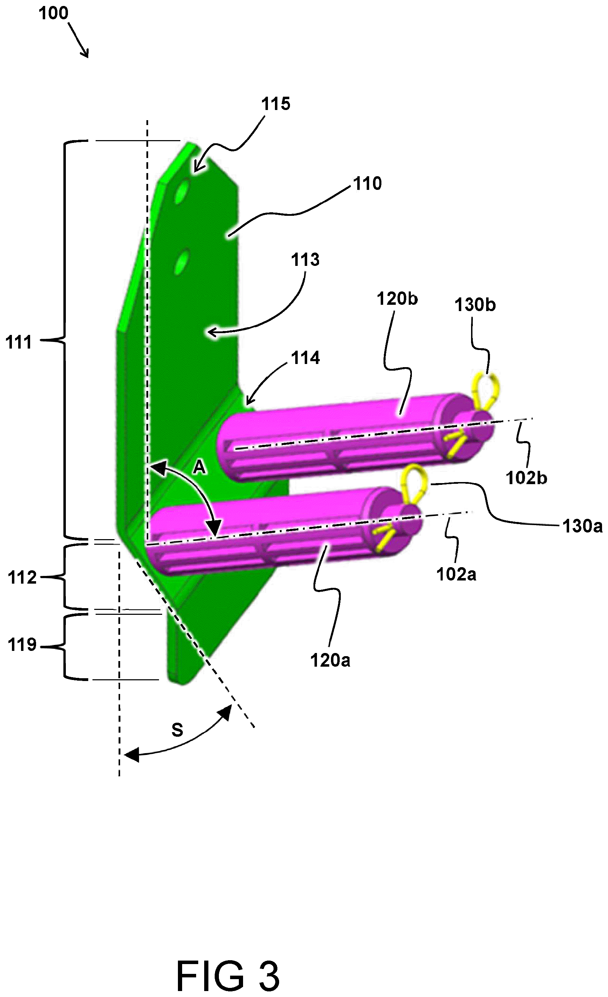

FIG. 3 illustrates in detail an embodiment of a wheel chock holder 100, for holding a wheel chock 200 of the type described above. The wheel chock holder 100 comprises a base plate 110 that is mountable to the chassis 2 of the truck 1, or to any other object or structure. The base plate 110 provides a contact surface 113 that is arranged for abutting the flat wall 201 of the wheel chock 200, when the wheel chock 200 is held by the wheel chock holder 100 in a secured position.

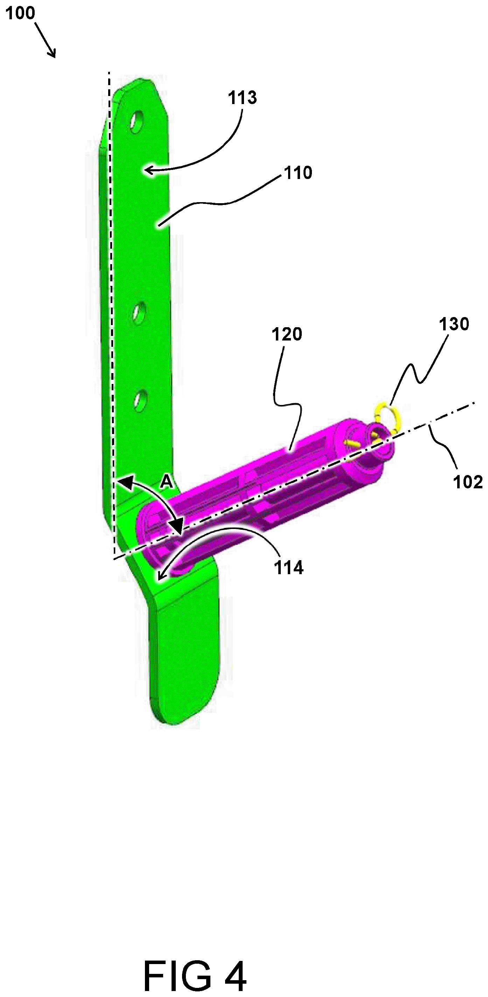

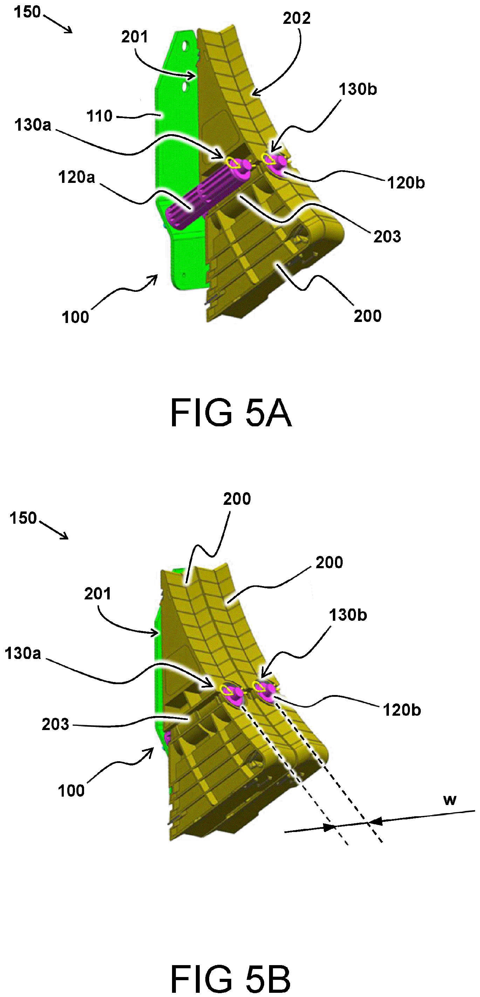

A pair of stud pins 120a, 120b protrude from the base plate 110. Each stud pin is arranged for extending through the pivot element 203 of a wheel chock 200, to hold the wheel chock in the secured position. Instead of two stud pins, the wheel chock holder 100 may comprise only one, or more than two stud pins, depending on the number of wheels chocks that are to be carried on board of the truck. FIG. 4 illustrates an embodiment in which the wheel chock holder 100 comprises one stud pin 120. Preferably, in case of more than one stud pin as shown in FIG. 5A-B, the stud pins 120a, 120b are arranged parallel and coplanar with each other, and arranged next to each other with a lateral clearance w between the stud pins 120a, 120b that corresponds with a lateral thickness of the wheel chock in the closed configuration, such that the wheel chocks 200 are held directly next to each other, and in contact against each other, when held by the wheel chock holder 100. This provides a compact solution that also further limits movement of the wheel chocks due to the contact and corresponding friction between the wheel chocks.

To provide a proper fit with minimal play between the stud pin 120, 120a, 120b and the pivot element 203, the outer diameter of the stud pin 120, 120a, 120b is preferably equal to, or less than 10% smaller than, the inner diameter of the pivot element 203. Each stud pin 120 extends from the base plate 110 at an incline angle A such that the stud pins 120, 120a, 120b are inclined towards the contact surface 113. The incline angle A is about equal to or less than the angle B between the flat wall 201 of the wheel chock 200 and the pivot element 203 of the wheel chock shown in FIG. 2B. Preferably, the incline angle between the centerline 102, 102a, 102b of the stud pin and the contact surface 113 is less than 90 degrees and more than 20 degrees, e.g. in a range between 40 and 80 degrees.

As illustrated, the base plate 110 comprises a first section 111 that provides the contact surface 113, and a second section 112 that provides a slope surface 114 which is sloped with respect to the contact surface 113, e.g. by an angle S. For manufacturability and weight saving, the base plate 110 may be made from plate material, e.g. with a plate thickness of 3-8 millimeters. The base plate may be made of a metal, plastics, or composite material. In case of metal, the wheel chock holder 100, or at least the base plate 110, may be painted or zinc coated to prevent corrosion. The base plate 110 can e.g. be bent in a shape that defines the first and second sections 111, 112. Alternatively, the base plate 110 including the contact surface 113 and the slope surface 114 can be formed by any other manufacturing method, e.g. casting or milling. The base plate may comprise a third section 119 that extends from the second section 112 at a further incline angle away from the centerline 102 of the stud pin, e.g. such that the third section 119 runs parallel to the first section 111, to provide space for the wheel chock. The edge or bend between the second section 112 and the third section 119 may optionally provide a further contact to support the flat wall of the wheel chock.

As illustrated, the stud pins 120, 120a, 120b are cylindrical and extend perpendicularly from the slope surface 114, which is sloped by angle S with respect to the contact surface 113, such that the centerlines 102a, 102b of the stud pins are oriented at the incline angle A with respect to the contact surface 113. The value of angle S can thus be calculated as S = 90 - A. Alternatively, or additionally the axial end of the stud pins 120a, 120b that connects to the base plate 110 may be beveled with respect to the centerline 102a, 102b, e.g. by the angle S, to define the incline angle A.

The base plate 110 of the wheel chock holder is preferably mounted to the chassis 2 of the truck 1, such that the contact surface 113 is in a substantially vertical orientation. Accordingly, due to the incline angle A, the one or more stud pins 120a, 120b are tilted upward with respect to a substantially level orientation. In other words, when the wheel chock holder 100 is mounted to the truck 1, the one or more stud pins 120a, 120b do not extend parallel to the ground or road surface, but are pointing upwards.

As illustrated in FIGs. 4 and 5A-B, when one or more wheel chocks 200 are held by the wheel chock holder 100 in the secured position, each stud pin 120, 120a, 120b extends through the pivot element 203 of a respective wheel chock 200 while the flat wall 201 of the wheel chock abuts the contact surface 113.

Locking means 130, 130a, 130b are provided at a distal end of the stud pins 120, 120a, 120b. When one or more wheel chocks 200 are held by the wheel chock holder 100, the locking means 130, 130a, 130b are arranged for preventing a movement of a respective wheel chock away from the contact surface 113 of the base plate 110 due to a rotation of the wheel chock about the corresponding centerline 102, 102a, 102b of the stud pin over which the respective wheel chock is mounted. The locking means 130, 130a, 130b are preferably releasable, or removable from the stud pins 120, 120a, 120b, in order to allow removal of the wheel chock from the wheel chock holder. Examples of removable locking means 130, 130a, 130b include locking springs, circlips, keys or latch members.

As illustrated, the locking means 130, 130a, 130b may comprise a retaining pin that is removably inserted into a transverse hole at the distal end of the stud pin 120, 120a, 120b. The retaining pin may be a spring loaded wire with a loop or tab section for pulling the retaining pin out. Alternatively, a retaining cap may be releasably attached to the distal end of the stud pin 120, 120a, 120b by a threaded connection, or a snap-fit connection can be provided between the distal end of the stud pin 120, 120a, 120b and the pivot element 203 of the wheel chock.

Optionally, the locking means comprise a pad lock or other locking device for preventing unauthorized release of the wheel chock from its secured position.

It will be clear to the skilled person that the invention is not limited to any specific embodiment herein described and that combinations or modifications are possible, in as far as these can be considered within the scope of the appended claims. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such.

## Claims

1. A wheel chock assembly, comprising:
- a wheel chock, comprising a wedge-shaped body defined by at least one substantially flat wall for resting against a ground and, at the top, at least one wall for bearing against a wheel of a vehicle, inclined with respect to the wall for resting against the ground, wherein the wedge-shaped body comprises two body sections fastened to each other in a rotatable manner around a common pivot element so as to be movable between a first closed configuration, in which the two body sections outline a compact wedge-shaped body, and a second spaced-apart configuration, in which the two body sections outline an extended wedge-shaped body; and
- a wheel chock holder that is arranged for releasably holding the wheel chock in a secured position;
wherein the wheel chock holder comprises:
- a base plate that is mountable to the truck and provides a contact surface arranged for abutting the flat wall of the wheel chock in the secured position;
- a stud pin that protrudes from the base plate at an incline angle such that the stud pin is inclined towards the contact surface, wherein, in the secured position, the stud pin extends through the pivot element of the wheel chock while the flat wall abuts the contact surface; and
- locking means provided at a distal end of the stud pin and arranged for preventing a movement of the wheel chock away from the contact surface of the base plate due to a rotation of the wheel chock about the centerline of the stud pin.

2. The wheel chock assembly according to claim 1, wherein the incline angle is in a range between 40 and 80 degrees.

3. The wheel chock assembly according to any preceding claim, wherein the base plate comprises a first section that provides the contact surface, and a second section that provides a slope surface which is sloped with respect to the contact surface, wherein the stud pin extends perpendicularly from the slope surface and wherein the centerline of the stud pin is oriented at the incline angle with respect to the contact surface.

4. The wheel chock assembly according to any preceding claim, wherein the stud pin is cylindrical.

5. The wheel chock assembly according to any preceding claim, wherein an outer diameter of the stud pin is equal to, or less than 10% smaller than, an inner diameter of the pivot element.

6. The wheel chock assembly according to any preceding claim, wherein the locking means are releasable for allowing removal of the wheel chock from the wheel chock holder.

7. The wheel chock assembly according to any preceding claim, wherein the locking means comprise at least one of:
- a retaining pin that is removably inserted into a transverse hole at the distal end of the stud pin;
- a retaining cap that is releasably attached to the distal end of the stud pin by a threaded connection; and
- a snap-fit connection between the distal end of the stud pin and the pivot element of the wheel chock.

8. The wheel chock assembly according to any preceding claim, wherein the wheel chock holder is painted or zinc coated.

9. The wheel chock assembly according to any preceding claim, wherein the wheel chock holder is arranged for holding a further wheel chock in a secured position directly next to the wheel chock, wherein the wheel chock holder comprises a further stud pin that protrudes from the base plate at the incline angle, such that a centerline of the further stud pin is inclined towards the contact surface, wherein the further stud pin extends through the pivot element of the further wheel chock in the secured position, and wherein further locking means are provided at a distal end of the further stud pin and arranged for preventing a movement of the further wheel chock away from the contact surface of the base plate due to a rotation of the further wheel chock about the centerline of the further stud pin.

10. The wheel chock assembly according to claim 9, wherein the stud pin and the further stud pin are parallel and coplanar with each other.

11. The wheel chock assembly according to claim 9 or 10, wherein a lateral distance between the centerline of the stud pin and the centerline of the further stud pin is equal to a thickness of the wheel chock in the first closed configuration.

12. A wheel chock holder arranged for holding a wheel chock as defined in claim 1 in a secured position, wherein the wheel chock holder comprises:
- a base plate that is mountable to the truck and provides a contact surface arranged for abutting the flat wall of the wheel chock in the secured position;
- a stud pin that protrudes from the base plate at the incline angle such that the stud pin is inclined towards the contact surface, wherein, in the secured position, the stud pin extends through the pivot element of the wheel chock while the flat wall abuts the contact surface; and
- locking means provided at a distal end of the stud pin and arranged for preventing a movement of the wheel chock away from the contact surface of the base plate due to a rotation of the wheel chock about the centerline of the stud pin.

13. A truck, comprising the wheel chock holder according to claim 12, wherein the base plate of the wheel chock holder is mounted to a chassis of the truck, such that the contact surface is in a substantially vertical orientation and wherein, due to the incline angle, the stud pin is tilted upward with respect to a substantially level orientation.

14. The truck according to claim 13, wherein the wheel chock holder is mounted to the chassis behind a rear axle of the truck, in a space between the chassis and a rear wheel bay.

15. The truck according to claim 14, further comprising a license plate that is attached to a further rear wheel bay on an opposing lateral side of the truck.
